# EUROPÄISCHE PATENTSCHRIFT

(11) **EP 2 054 132 B1**
(45) Veröffentlichungstag und Bekanntmachung des Hinweises auf die Patenterteilung: **30.06.2010**
(21) Anmeldenummer: 07725384.7
(22) Anmeldetag: 19.05.2007
(51) Int. Cl.: B01D 29/21, B01D 35/153

(54) **ÖLFILTERANORDNUNG**
OIL FILTER ASSEMBLY
ENSEMBLE FILTRE À HUILE

(30) Priorität: 21.07.2006 DE 102006034482
(43) Veröffentlichungstag der Anmeldung: 06.05.2009
(73) Patentinhaber: Joma-Polytec Kunststofftechnik GmbH, 72411 Bodelshausen (DE)
(72) Erfinder: MAIER, Jan, 72116 Mössingen (DE); PFITZER, Friedhelm, 72414 Rangendingen (DE); MAUTE, Alexander, 72379 Hechingen-Stetten (DE); HEINZ, Stefan, 72411 Bodelshausen (DE); JUNGMANN, Peter, 72406 Bisingen (DE); KNÖLL, Matthias, 72574 Bad Urach (DE)
(74) Vertreter: Bulling, Alexander
(86) Internationale Anmeldenummer: PCT/EP2007/004476
(87) Internationale Veröffentlichungsnummer: WO 2008/009324

(56) Entgegenhaltungen:
- WO-A-01/17657
- DE-U1- 20 118 683
- US-A1- 2003 024 870

## Beschreibung

Die Erfindung betrifft eine Ölfilteranordnung mit einem in einem Gehäuse angeordneten und mit einem aufschraubbaren Deckelelement verschließbaren Aufnahmeraum und mit einem im Aufnahmeraum befestigten und in axialer Richtung federbeaufschlagten Stützrohr zur Aufnahme eines radial mit Öl durchströmbaren Filterelements, wobei das Stützrohr in axialer Richtung zwischen einer Betrieblage und einer Ablasslage derart verlagerbar angeordnet ist, dass es bei mit dem Deckelelement verschlossenem Aufnahmeraum in der Betrieblage eine Ablassöffnung verschließt und bei geöffnetem Aufnahmeraum in der Ablasslage eine Ablassöffnung freigibt. Bei einer derartigen Ölfilteranordnung ist das Stützrohr derart am Aufnahmeraum befestigt, dass es bei einem Austausch des Filterelements im Gehäuse verbleibt. Zur Federbeaufschlagung des Stützrohrs kann insbesondere ein Federelement vorgesehen sein, dass das Stützrohr in Richtung Ablasslage beaufschlagt. Das Federelement kann sich dabei einerseits direkt am Stützrohr und andererseits an einem den Aufnahmeraum bildenden Gehäuse abstützen.

Aus der WO01/17657 A2 (= EP1137470 A2) ist eine Ölfilteranordnung bekannt geworden, bei der ein Ablassdom gemeinsam mit einem Filtereinsatz axial beweglich zwischen einer ersten, eine Ablassleitung verschließenden Stellung und einer zweiten, die Ablassleitung freigebenden Stellung gelagert ist, wobei der Ablassdom filtergehäusefest angeordnet ist und federbeaufschlagt in seine Freigabestellung gedrängt ist. Der Ablassdom wird dabei entgegen der Federwirkung mittels des in das Filtergehäuse eingesetzten Filtereinsatzes in seine Schließstellung bewegt.

Aus der EP 1 106 795 A1 (= DE 600 18 360 T2) ist ein Flüssigkeitsfilter bekannt geworden, der ein Verschlussorgan aufweist, dass dazu geeignet ist, in einen Entleerungskanal einzudringen und dabei diesen Kanal zu schließen, wenn ein Deckel des Filtereinsatzes den Aufnahmeraum verschließt. Das Verschlussorgan öffnet allerdings den Entleerungskanal, wenn der Filtereinsatz aus dem Aufnahmeraum entnommen wird. Um das Verschlussorgan in der Betriebslage zu halten, ist am Filtereinsatz ein Anschlag vorgesehen, der mit dem Verschlussorgan zusammenwirkt um dieses bei geschlossenem Deckelelement in der Betriebslage zu halten.

Der vorliegenden Erfindung liegt die Aufgabe zugrunde, eine Ölfilteranordnung der eingangs genannten Art weiterzubilden. Insbesondere soll eine Ölfilteranordnung bereitgestellt werden, die funktionssicher arbeitet und bei der ein Austausch des Filterelements auf einfache Art und Weise möglich ist. Das Filterelement selbst soll dabei einen möglichst einfachen Aufbau aufweisen.

Diese Aufgabe wird mit einer Ölfilteranordnung mit den Merkmalen des Anspruchs 1 gelöst. Die erfindungsgemäße Ölfilteranordnung sieht folglich vor, dass das Stützrohr um eine von zwei gehäuseseitigen Drehanschlägen begrenzten Verdrehwinkel verdrehbar angeordnet ist, wobei das Deckelelement mit dem Stützrohr und/oder dem Filterelement zusammenwirkende Mitnahmeabschnitte zum Verdrehen des Stützrohrs um den Verdrehwinkel beim Auf- und/oder Abschrauben des Deckelelements aufweist. Es hat sich herausgestellt, dass nach längerem Betrieb von Ölfilteranordnungen sich das Stützrohr, insbesondere in den Bereich, in dem es die Ablassöffnung verschließt, festsetzt. Beim bekannten Stand der Technik führt dies dazu, dass beim axialen Öffnen des Deckelelements das Stützrohr in der Betriebslage verharrt. Gemäß der Erfindung wird erreicht, dass das Stützrohr insbesondere beim Abschrauben des Deckelelements um den Verdrehwinkel zwangsbewegt wird, so dass sich das Stützrohr, und insbesondere der die Ablassöffnung verschließende Bereich des Stützrohrs, vom Gehäuse löst. Hierdurch wird erreicht, dass das Stützrohr letztendlich aufgrund der Federbeaufschlagung nach axial oben, in die Ablassstellung bewegt wird. Ein selbsttätiges Öffnen der Ablassöffnung wird hierdurch gewährleistet.

Insbesondere kann vorgesehen sein, dass der Verdrehwinkel im Bereich von 5° bis 90° und insbesondere im Bereich von 10° bis 30° liegt. Ein Verdrehbereich von cirka 15° hat sich hierbei als optimal herausgestellt, um ein Lösen des die Ablassöffnung verschließenden Bereiches des Stützrohrs zu gewährleisten.

Zur beweglichen Befestigung des Stützrohrs im Aufnahmeraum können insbesondere im Bereich des Bodens des Aufnahmeraums sich in axialer Richtung erstreckende Verbindungszapfen vorgesehen sein, die in stützrohrseitige Zapfenaussparungen eingreifen, wobei die um die Mittellängsachse koaxial einander gegenüberliegenden Bereiche wenigstens einer Zapfenaussparung die Drehanschläge bilden. Die Zapfenaussparungen können dabei insbesondere ringsegmentartig, koaxial um die Mittellängsachse ausgebildet sein. Vorteilhafterweise sind wenigstens zwei einander gegenüberliegende, ringsegmentartig ausgebildete Zapfenaussparungen vorgesehen, wobei die jeweiligen einander gegenüberliegenden Enden einer Zapfenaussparung dann die Drehanschläge bilden.

Die Verbindungszapfen können im Bereich ihrer freien Enden eine Aufweitung aufweisen, wobei die Unterkante der Aufweitung in der Ablasslage des Stützrohrs einen Axialanschlag für das Stützrohr bildet. Derartige Verbindungszapfen dienen folglich als Drehanschläge einer begrenzten Verdrehung um die Mittellängsachse und als Axialanschläge des federbeaufschlagten Stützrohrs in der Ablasslage.

Die Aufweitungen können dabei insbesondere durch Heißnieten nach dem Einsetzen des Stützrohrs und damit der Zapfenaussparungen in die Verbindungszapfen hergestellt werden. Allerdings ist auch denkbar, dass die Aufweitungen als die jeweiligen Zapfenaussparungen hinterrastende Rastnasen ausgebildet sind. Beispielsweise kann das Stützrohr zur Montage in axialer Richtung in die Aufnahme eingeführt werden, wobei die Rastnasen dann die Zapfenaussparungen in der Montageposition hinterrasten. Das Gehäuse ist vorteilhafterweise aus Kunststoff ausgebildet, wobei die Verbindungszapfen vorteilhafterweise an das Gehäuse angeformt sind.

Die Zapfenaussparungen sind dabei vorteilhafterweise an nach radial außen abstehenden Füßen oder an einem in nach radial außen gewandter Richtung abstehenden und wenigstens abschnittsweise umlaufenden Kragen des Stützrohrs angeordnet.

Die das Filterelement mitnehmenden Mitnahmeabschnitte des Deckelelements können insbesondere als nach radial innen ragende Rippen und/oder nach axial unten ragende Stege ausgebildet sein. Die Rippen beziehungsweise Stege können dann, je nach Ausgestaltung der Erfindung, zum einen unmittelbar am Stützrohr angreifen. Zum anderen ist denkbar, dass die Mitnahmeabschnitte unmittelbar am Filterelement angreifen, wobei das Stützrohr dann über das Filterelement um seine Mittellängsachse verdreht wird.

Ferner ist denkbar, dass das Deckelelement auf seiner dem Aufnahmeraum zugewandten Seite einen Stützrohranlagebereich derart aufweist, dass bei auf dem Stützrohr angeordnetem Filterelement während des Schließens des Aufnahmeraums das Stützrohr direkt vom Stützrohranlagebereich beaufschlagt und in die Betriebslage verlagert wird. Anders als beim vorbekannten Stand der Technik wird folglich das Stützrohr unmittelbar und direkt vom Deckelelement, über dessen Stützrohranlagebereich, beim Schließen des Deckels in die Betriebslage gebracht. Dabei erfolgt also die Verlagerung des Stützrohrs in die Betriebslage nicht über das Filterelement, sondern direkt über das Deckelelement, das gegen das Stützrohr wirkt. Dies hat den Vorteil, dass das Filterelement selbst keine hohe Eigensteifigkeit aufweisen muss und deshalb vergleichsweise einfach aufgebaut sein kann. Insbesondere muss das Filterelement keine, in axialer Richtung Kräfte übertragenden, Bauteile vorsehen. Es hat sich beim Stand der Technik nämlich herausgestellt, dass bei Filterelementen, die über einen längeren Zeitraum im Einsatz sind, die Eigensteifigkeit in axialer Richtung nachlassen kann, wodurch eine ungewollte Verlagerung des Stützrohrs in die Ablassstellung auftreten kann. Gemäß der Erfindung ist also entscheidend, dass das Stützrohr nicht über das Filterelement in der Betriebslage gehalten wird.

Weiterhin kann vorgesehen sein, das dass das Deckelelement auf seiner dem Aufnahmeraum zugewandten Seite einen Stützrohranlagebereich derart aufweist, dass bei auf dem Stützrohr angeordnetem Filterelement und geschlossenem Aufnahmeraum der Stützrohranlagebereich das Stützrohr direkt in der Betriebslage hält. Der Stützrohranlagebereich dient folglich dazu, im Betrieb der Ölfilteranordnung das Stützrohr in seiner Betriebslage zu halten. Auch dies hat den Vorteil, dass beim Betrieb der Ölfilteranordnung das Filterelement keine axialen Kräfte zu übertragen hat, um das Stützrohr in der Betriebslage zu halten. Insofern kann der Aufbau des Filterelements einfacher ausfallen, als bei den Ölfilteranordnungen gemäß dem vorbekannten Stand der Technik.

Das Stützrohr kann selbstverständlich an seinem freien Ende Funktionsbauteile umfassen, wobei die Funktionsbauteile des Stützrohrs dann mit den Mitnahmeabschnitten und/oder dem Stützrohranlagebereich zusammenwirken. Als Funktionsbauteil kommt insbesondere ein Überdruckventil in Betracht, das bei zugesetztem Filterelement, und einem daraus resultierenden höheren Druck im Bereich der Rohölseite, öffnet. Das Öl kann dann ungefiltert die Ölfilteranordnung passieren.

Für ein vorteilhaftes Zusammenwirken des Stützelements mit dem Deckelelement beim Schließen oder Öffnen des Aufnahmeraums, beziehungsweise bei geschlossenem Aufnahmeraum, kann vorgesehen sein, dass das Stützrohr bei auf dem Stützrohr angeordnetem Filterelement in Richtung zum Deckel hin überragt. Dadurch wird eine vorteilhafte Angriffsfläche für den Stützrohranlagebereich des Deckels gebildet.

Das Deckelelement kann gemäß einer weiteren Ausführungsform der Erfindung einen Filterelementanlagebereich derart aufweisen, dass während des Schließens des Aufnahmeraums das Filterelement direkt vom Filterelementanlagebereich in eine Betriebsposition auf dem Stützrohr verschoben wird. Sollte der Fall auftreten, dass bei einem Wechsel des Filterelements das Filterelement nicht weit genug auf das Stützrohr aufgeschoben wird, so wird beim Schließen des Aufnahmeraums das Stützrohr in seine Betriebsposition verschoben. Bei geschlossenem Deckel ist das Filterelement allerdings in seiner Betriebsposition und in der Betriebslage des Stützrohrs vorzugsweise so angeordnet, dass über das Filterelement im Wesentlichen keine Axialkräfte übertragen werden.

Dabei ist denkbar, dass der Stützrohranlagebereich und der Filterelementanlagebereich in axialer Richtung in verschiedenen Ebenen liegen und/oder das der Stützrohranlagebereich am Deckelelement radial weiter innen angeordnet ist als der Filterelementanlagebereich. Dies hat den Vorteil, dass der Stützrohranlagebereich klar getrennt vom Filterelementanlagebereich im Deckelelement vorgesehen ist.

Der Stützrohranlagebereich kann dabei insbesondere von dem Stützrohr zugewandten Stirnseiten von sich in axialer Richtung erstreckenden Stegen oder Längsrippen im Deckelinneren gebildet sein. Dies hat den Vorteil, dass, falls am freien Ende des Stützrohrs ein Überdruckventil angeordnet ist, Öl zwischen den Stegen beziehungsweise Längsrippen hindurch zum Eingang des Überdruckventils fließen kann.

Auch der Filterelementanlagebereich kann von entsprechend ausgebildeten, am Deckel angeordneten und nach radial innen abstehenden Stegen oder Rippen gebildet sein, so dass zwischen diesen Rippen Öl das Filterelement umströmen kann und zum Ventileingang des Überdruckventils gelangen kann.

Dabei ist insbesondere denkbar, dass der Stützrohranlagenbereich und/oder der Filterelementanlagenbereich von den Mitnahmeabschnitten, beziehungsweise von den die Mitnahmeabschnitte bildenden Rippen oder Stegen gebildet sein kann.

Ferner können insbesondere an dem dem Deckelelement zugewandten, freien Ende des Stützrohrs mit den deckelseitigen Mitnahmeabschnitten zusammenwirkende Aussparungen oder Erhebungen sein, welche ein bedingtes Verdrehen des Stützrohrs beim Verdrehen des Deckelelements gewährleisten. Die Aussparungen und/oder Erhebungen können dabei insbesondere keilartig ausgebildet, in axialer Richtung und/oder in radialer Richtung abstehend vorgesehen sein.

Ein Filterelement für eine erfindungsgemäße Ölfilteranordnung weist an einer Endkappe, nämlich an der mit dem Deckelelement zusammenwirkenden Endkappe, Aussparungen oder Erhebungen auf, mit denen es mit den deckelseitigen Mitnahmeabschnitten beim Verdrehen des Deckelelements zusammenwirkt. Die Aussparungen oder Erhebungen können dabei insbesondere keilförmig ausgebildet sein, so dass ein Mitdrehen des Filterelements in die entsprechende Richtung gewährleistet wird.

Das Stützrohr kann gemäß einer weiteren Ausbildung der Erfindung auf der dem Deckelelement abgewandten Seite und in dem vom Filterelement nicht abgedeckten Bereich einen in radialer Richtung geschlossenen, in einen einen Ölauslass aufweisenden Reinölraum eingreifenden Verlängerungsabschnitt aufweisen, der an seinem, dem Deckelelement abgewandten Bereich, wenigstens eine Reinölaustrittsöffnung aufweist. Hierdurch kann folglich vom Filterelement gefiltertes Reinöl durch den Verlängerungsabschnitt des Stützrohrs in den Reinölraum und von dort in den Ölauslass abfließen.

Der Bereich des Stützrohres, der vom Filterelement abgedeckt wird, weist Durchbrüche in radialer Richtung auf, durch welche das vom Filterelement gefilterte Reinöl in das Stützrohr einströmen kann. Das Filterelement liegt dabei vorteilhafterweise im Bereich seiner Endkappen unmittelbar dichtend am Stützrohr an.

Zur Abdichtung des Reinölraums gegenüber dem das nicht gefilterte Rohöl aufnehmenden Aufnahmeraums kann am Verlängerungsabschnitt ein umlaufender, in radialer Richtung überstehender Dichtbund angeformt sein.

Das Stützrohr kann dann an seinem freien Ende des Verlängerungsabschnitts vorteilhafterweise einen im Bereich der Mittellängsachse angeordneten Verschlussabschnitt zum Verschließen der Ablassöffnung in der Betriebsstellung aufweisen. Das Federelement, dass das Stützrohr in die Ablasslage beaufschlagt, kann dabei im Reinölraum um den Verlängerungsabschnitt des Stützrohrs angeordnet sein.

Weitere Einzelheiten und vorteilhafte Ausgestaltungen der Erfindung sind der nachfolgenden Beschreibung zu entnehmen, anhand derer die in den Figuren dargestellten Ausführungsbeispiele näher beschrieben und erläutert sind.

Es zeigen:
- Figur 1: einen Längsschnitt durch eine erste erfindungsgemäße Ölfilteranordnung;
- Figur 2: einen Längsschnitt durch den oberen Teil der Ölfilteranordnung gemäß Figur 1;
- Figur 3: einen Längsschnitt durch den unteren Teil der Ölfilteranordnung gemäß Figur 1; und
- Figur 4: einen Schnitt entsprechend Figur 3 in einer Montagestellung.

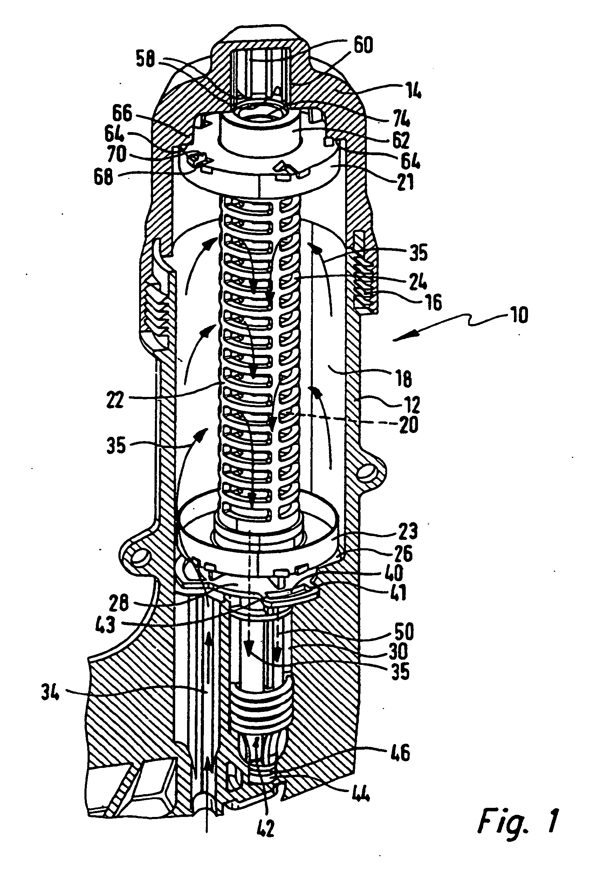

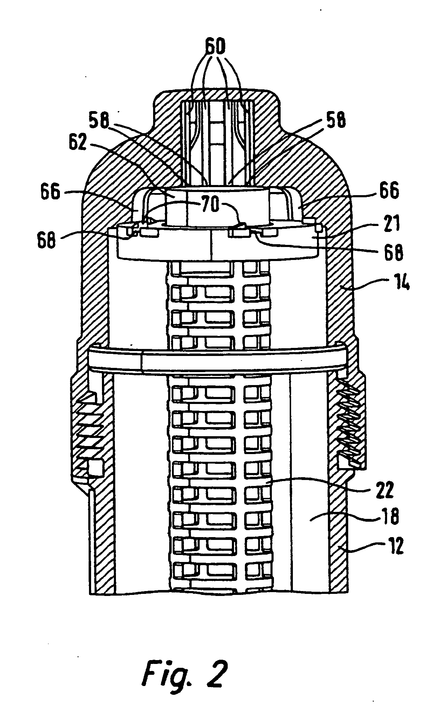

Die in den Figuren 1 bis 4 dargestellte Ölfilteranordnung 10 umfasst ein Gehäuse 12, das mit einem Deckel 14 über ein Gewinde 16 verschließbar ist. Das Gehäuse 12 und der Deckel 14 bilden einen Aufnahmeraum 18, in dem ein radial mit Öl durchströmbares Filterelement 20 angeordnet ist. In der Figur 1 und 2 sind zur Veranschaulichung der Funktionsweise lediglich die beiden Endkappen 21, 23 des Filterelements 20 dargestellt. Das Filterelement 20 wird von einem Stützrohr 22 getragen, das in dem Bereich, in dem es vom Filterelement 20 abgedeckt wird, zargenartig ausgebildet ist. Zur radialen Durchströmung des Stützrohres 22 mit Öl sind am Stützrohr eine Vielzahl von Durchbrüchen 24 vorgesehen. Das Stützrohr weist an seiner einem Boden 26 des Aufnahmeraums 18 zugewandten Seite einen nach radial außen gerichteten, umlaufenden Ringkragen 28 auf. Anstelle des Vorsehens des Ringkragens 28 ist denkbar, dass lediglich Ringkragenabschnitte oder Füße.

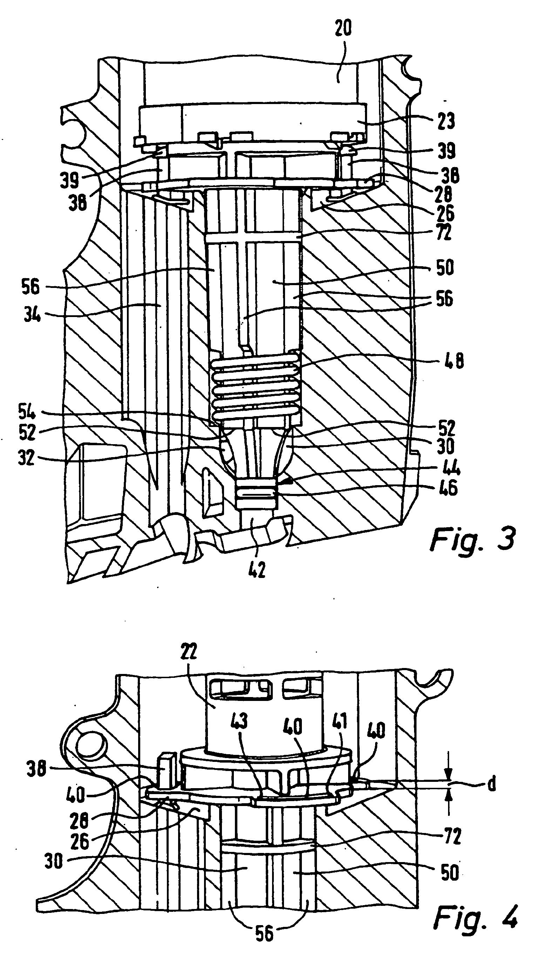

An den Aufnahmeraum 18 schließt sich in axialer, nach unten gewandter Richtung, ein Reinölraum 30 an, in dem an seinem axialen Ende ein Ölsauslass 32 vorgesehen ist. Parallel zum Reinölraum 30 erstreckt sich innerhalb des Gehäuses 12, wie insbesondere aus Figur 1 und 3 deutlich wird, ein Öleinlass 34, durch welchen ungefiltertes Rohöl in den Aufnahmeraum 18 einströmen kann. Der Ölstrom im Betrieb der Ölfilteranordnung 10 ist in der Figur 1 durch die Pfeile 35 angedeutet. Im Betrieb der Ölfilteranordnung 10 strömt folglich zu filterndes Öl vom Öleinlass 34 durch das Filterelement 20 hin zum Ölauslass 32.

Das Stützrohr 22 ist in axialer Richtung von oben in den Aufnahmeraum 18 eingesetzt und ist dort unlösbar befestigt. Dazu sind im Bereich des Bodens 26, wie insbesondere aus Figuren 3 und 4 deutlich wird, sich in axialer Richtung erstreckende Verbindungszapfen 38 vorgesehen. Diese Verbindungszapfen 38 ragen dabei im montierten Zustand in am Ringkragen 28 vorgesehene Zapfenaussparungen 40. Wie aus Figur 1 deutlich wird, sind diese Zapfenaussparungen 40 ringsegmentartig ausgebildet. Zur Montage des Stützrohrs 22 wird dieses in axialer Richtung derart in den Aufnahmeraum eingeführt, dass die Verbindungszapfen 38 in die Zapfenaussparungen 40 eintauchen, wie in Figur 4 dargestellt.

Nach dem Einsetzten des Stützrohrs 22 werden die freien Enden der Verbindungszapfen 38 beispielsweise thermisch verformt, so dass sich an ihren freien Enden pilzkopfartige Aufweitungen 39, die in Figur 3 deutlich zu erkennen sind, entstehen. Der Abstand vom Boden 26 des Aufnahmeraums 18 zur Unterkante der Aufweitung 39 ist dabei so gewählt, dass eine Verlagerung des Stützrohrs 22 von der in den Figuren 1 bis 4 gezeigten Betriebslage in eine Ablasslage ermöglicht wird, in der die die Aussparungen 40 umgebenden Bereiche des Ringkragens 28 an der Unterseite der Aussparungen zum Anliegen kommt. In der Betriebslage wird eine am unteren Ende des Reinölraums 30 vorgesehene Ablassöffnung 42 von einem Verschlussabschnitt 44 des Stützrohrs 22 verschlossen ist.

Der Verschlussabschnitt 44 sieht eine umlaufende Dichtung 46 vor.

Beim Entfernen des Deckelelements 14 wird aufgrund eines sich einerseits am Gehäuse 12 und andererseits am Stützrohr 22 abstützenden Federelements 48 das Stützrohr 22 in die Ablasslage verlagert. In der Ablasslage liegen zum einen die die Aussparung 40 umgebenden Bereiche des Ringkragens 28 an den Unterseiten der Aufweitungen 39 an und zum anderen gelangt der Verschlussabschnitt 44 aus dem Bereich der Ablassöffnung 42, so dass über die Ablassöffnung 42 Öl aus dem Aufnahmeraum 18 abströmen kann.

Wie aus den Figuren 1, 3 und 4 deutlich wird, weist das Stützrohr auf der dem Deckelelement 14 abgewandten Seite einen in radialer Richtung geschlossenen, in den Reinölraum 30 eingreifenden Verlängerungsabschnitt 50 auf. Der Verlängerungsabschnitt 50 sieht dabei auf seiner dem Deckelelement 16 abgewandten Seite eine Reinölsaustrittsöffnung 52 vor, aus der gefiltertes Reinöl in den Reinölraum 30 einströmen kann. Von der Reinölaustrittsöffnung 52 strömt das gefilterte Reinöl folglich durch den Reinölraum 30 hin zum sich in radialer Richtung an den Reinölraum 30 anschließenden Ölauslass 32.

Wie insbesondere aus Figur 3 deutlich wird stützt sich das Federelement 48 einerseits an einer reinölraumseitigen Schulter 54 und andererseits an den Stirnseiten von sich in axialer Richtung erstreckenden Stegen 56 des Verlängerungsabschnitts 50 ab.

Wie bereits erwähnt, befindet sich aufgrund der Federvorspannung des Federelements 48 das Stützrohr 22 bei geöffnetem Deckelelement 14 in der Ablasslage. Um das Stützrohr 22, samt auf dem Stützrohr 22 angeordnetem Filterelement 20, beim Aufschrauben des Deckelelements 14 in die Betriebslage zu überführen, weist das Deckelelement 14 auf seiner dem Aufnahmeraum 18 zugewandten Seite einen Stützrohranlagebereich 58 auf. Der insbesondere in Figur 1 und 2 deutlich zu erkennende Stützrohranlagebereich 58 wird dabei von an der Innenseite des Deckelelements angeordneten, nach radial innen ragenden Rippen 60 gebildet. Die sich in radialer Richtung erstreckenden Stirnseiten der Rippen 60 beaufschlagen dabei die Stirnseite des freien Endes 62 des Stützrohrs 22. Wie insbesondere aus Figur 2 deutlich wird, überragt das Stützrohr 22, beziehungsweise dessen freies Ende 62, in der Betriebslage das Filterelement 20, beziehungsweise dessen Endkappe 21, in axialer Richtung hin zum Deckel. Der Stützrohranlagebereich 58 gewährleistet ferner, dass bei geschlossenem Deckelelement 14 das Stützrohr 22 in der Betriebslage gehalten wird.

Aufgrund des Vorsehens der Stützrohranlagebereiche 58 am Deckelelement 14 wird gewährleistet, dass insbesondere in der Betriebslage das Filterelement 20 vorteilhafterweise keinerlei axiale Kräfte zu übertragen hat. Der Kraftfluss, ausgehend vom Federelement 48, erfolgt über das Stützrohr 22 in das Deckelelement 14.

Zur positionsgenauen Anordnung des Filterelements 20 auf dem Stützrohr 22 sind an der Innenseite des Deckelelements 14 Filterelementanlagebereiche 64 vorgesehen. Die Filterelementanlagebereiche 64 dienen dazu, das Filterelement 20 in seine Betriebsposition beim Aufschrauben des Deckelelements 14 zu verschieben. Die Filterelementauflagebereiche 64 sind dabei ebenfalls durch entsprechend angeordnete Rippen 66 realisiert. Die Stützrohranlagebereiche 58 liegen allerdings weiter radial innen als die Filterelementanlagebereiche 64. Ferner liegen die Stützrohranlagebereiche 58 in axialer Richtung weiter oben als die Filterelementanlagebereiche 64.

Nach längerem Betrieb der Ölfilteranordnung kann der Fall auftreten, dass sich das Dichtungselement 46 beziehungsweise der Verschlussabschnitt 44 am Gehäuse festsetzt. Um ein Lösen eines sich festgesetzten Verschlussabschnitts 44 beziehungsweise Dichtungselements 46 beim Öffnen des. Deckelelements zu erreichen, sind die Rippen 60 und/oder die Rippen 66 als Mitnahmeabschnitte bzw. Mitnahmerippen zum Mitdrehen des Stützrohres 22 und/oder des Filterelements 20 beim Verdrehen des Deckelelements 14 ausgebildet. Der Verdrehwinkel des Stützrohres 22, der insbesondere cirka 15° betragen kann, wird durch die sich koaxial zur Mittellängsachse erstreckenden Länge der Zapfenaussparungen 40 bestimmt. Die koaxial einander gegenüberliegenden Seiten der Zapfenaussparungen 40 bilden dabei Drehanschläge 41, 43 für die in die Zapfenaussparungen 40 eingreifenden Verbindungszapfen 38. Aufgrund des Verdrehens kann ein sich festgesetztes Stützrohr 20 gelöst werden, wodurch ein selbsttätiges, axiales Bewegen des Stützrohrs 22 ermöglicht wird. Um ein Mitdrehen des Stürzrohrs 22 beziehungsweise des Filterelements 20 zu erreichen, können am Stützrohr 22, beziehungsweise am Filterelement 20, Mitnahmeaussparungen 68 beziehungsweise insbesondere keilartige Mitnahmeerhebungen 70, wie sie beispielhaft an den Endscheiben 21 und 23 dargestellt sind, vorgesehen sein. Die Mitnahmeaussparungen 68 beziehungsweise Mitnahmeerhebungen 70 können sich in radialer Richtung als auch in axialer Richtung erstrecken. Ferner können sie auch zusätzlich, oder ausschließlich, im Bereich des freien Endes 62 des Stützrohrs 22 vorgesehen sein. Insbesondere dann, wenn ein Filterelement Verwendung findet, mit dem Kräfte nur bedingt übertragbar sind, sind die Mitnahmeaussparungen beziehungsweise Mitnahmeerhebungen, die mit den deckelseitig angeordneten Rippen oder Stegen zusammenwirken, ausschließlich am Stützrohr 22 vorgesehen.

Um ein unerwünschtes Einströmen von Rohöl aus dem Aufnahmeraum 18 entlang des Verlängerungsabschnitts 50 hin zum Reinölraum 30 zu unterbinden, ist am Verlängerungsabschnitt 50 ein umlaufender Dichtbund 72 angeformt. Der Dichtbund 52 wirkt dabei gegen die Wandung des Reinölraums 30. Der Dichtbund 72 ist dabei derart angeordnet, dass er bei einer axialen Verlagerung des Stützrohrs 22 in die Ablasslage aus dem Bereich der Wandung des Reinölraums gelangt, so dass im Aufnahmeraum 18 vorhandenes Rohöl ungehindert in den Reinölraum 30 einfließen und über die Ablassöffnung 42 aus dem Reinölraum 30 abfließen kann.

Am freien, dem Deckelelement 14 zugewandten Ende 62 des Stützrohrs 22, ist, wie insbesondere aus Figur 1 deutlich wird, ein Überdruckventil 74 angeordnet, das bei einem im Aufnahmeraum 18 erhöhten Druck öffnet, so dass ungefiltertes Rohöl in die Innenseite des Stützrohrs 22 einströmen kann. Aufgrund der als Rippen 60 ausgebildeten Stützrohranlagebereiche 58 kann zwischen den Rippen 60 Öl hin zum Eingang des Überdruckventils 74 ungehindert strömen. Da auch die Filterelementanlagebereiche 64 rippenartig ausgebildet sind, kann auch Öl ungehindert zwischen dem Filterelement 20 und dem Deckel 14 zum Ventil 74 strömen.

## Patentansprüche

1. Ölfilteranordnung (10) mit einem in einem Gehäuse (12) angeordneten und mit einem aufschraubbaren Deckelelement (14) verschließbaren Aufnahmeraum (18) und mit einem im Aufnahmeraum (18) befestigten und in axialer Richtung federbeaufschlagten Stützrohr (22) zur Aufnahme eines radial mit Öl durchströmbaren Filterelements (20), wobei das Stützrohr (22) in axialer Richtung zwischen einer Betrieblage und einer Ablasslage derart verlagerbar angeordnet ist, dass es bei mit dem Deckelelement (14) verschlossenem Aufnahmeraum (18) in der Betrieblage eine Ablaßöffnung (42) verschließt und bei geöffnetem Aufnahmeraum (18) in der Ablasslage eine Ablassöffnung (42) freigibt, **dadurch gekennzeichnet, dass** das Stützrohr (22) um eine von zwei gehäuseseitigen Drehanschlägen (41, 43) begrenzten Verdrehwinkel verdrehbar angeordnet ist, wobei das Deckelelement (14) mit dem Stützrohr (22) und/oder dem Filterelement (20) zusammenwirkende Mitnahmeabschnitte (60, 66) zum Verdrehen des Stützrohrs um den Verdrehwinkel beim Auf- und/oder Abschrauben des Deckelelements aufweist.

2. Ölfilteranordnung (10) nach Anspruch 1, **dadurch gekennzeichnet, dass** der Verdrehwinkel im Bereich von 5° bis 90° und insbesondere im Bereich von 10° bis 30° liegt.

3. Ölfilteranordnung (10) nach Anspruch 1 oder 2, **dadurch gekennzeichnet, dass** im Bereich des Bodens (26) des Aufnahmeraums (18) sich in axialer Richtung erstreckende Verbindungszapfen (38) vorgesehen sind, die in stützrohrseitigen Zapfenaussparungen (40) eingreifen, wobei die um die Mittellängsachse koaxial einander gegenüberliegenden Bereich einer Zapfenaussparung (40) die Drehanschläge (41, 43) bilden.

4. Ölfilteranordnung (10) nach Anspruch 1, 2 oder 3,**dadurch gekennzeichnet, dass** die Verbindungszapfen (38) im Bereich ihrer freien Enden eine Aufweitung (39) aufweisen, wobei die Unterkante der Aufweitung (39) in der Ablasslage des Stützrohrs (22) eine Axialanschlag für das Stützrohr bildet.

5. Ölfilteranordnung (10) nach Anspruch 4, dass die Aufweitung (39) durch Heißnieten nach dem Einsetzten des Stützrohrs (22) und damit der Zapfaussparungen (40) in die Verbindungszapfen (38) hergestellt ist.

6. Ölfilteranordnung (10) nach Anspruch 4, **dadurch gekennzeichnet, dass** die Aufweitung (39) als die jeweilige Zapfenaussparung (40) hinterrastende Rastnase ausgebildet ist.

7. Ölfilteranordnung (10) nach einem der Ansprüche 3 bis 6, **dadurch gekennzeichnet, dass** die Zapfenaussparungen (40) an nach radial außen abstehenden Füßen (104) oder an einem in nach radial außen gewandter Richtung abstehenden und wenigstens abschnittsweise umlaufenden Kragen (28) des Stützrohrs (22) angeordnet sind.

8. Ölfilteranordnung (10) nach wenigstens einem der vorhergehenden Ansprüche, **dadurch gekennzeichnet, dass** die Mitnahmeabschnitte als nach radial innen ragende und/oder nach axial unten ragende Stege oder Rippen (60, 66) ausgebildet sind.

9. Ölfilteranördnung (10) nach wenigstens einem der vorhergehenden Ansprüche, dass das Deckelelement (14) auf seiner dem Aufnahmeraum (18) zugewandten Seite einen Stützrohranlagebereich (58) derart aufweist, dass bei auf dem Stützrohr (22) angeordnetem Filterelement (20) während des Schließens des Aufnahmeraums (14) das Stützrohr (22) direkt vom Stützrohranlagebereich (58) dass bei auf dem Stützrohr (12) angeordnetem Filterelement (20) und bei geschlossenem Aufnahmeraum (18) der Stützrohranlagebereich (58) das Stützrohr (22) direkt in der Betriebslage hält.

10. Ölfilteranordnung (10) nach wenigstens einem der vorhergehenden Ansprüche, **dadurch gekennzeichnet, dass** das Stützrohr (22) bei geschlossenem Aufnahmeraum (18) und bei auf dem Stützrohr (22) angeordnetem Filterelement (20) das Filterelement in Richtung zum Deckelelement (14) hin überragt.

11. Ölfilteranordnung (10) nach wenigstens einem der vorhergehenden Ansprüche, **dadurch gekennzeichnet, dass** das Deckelelement (14) auf seiner dem Aufnahmeraum (18) zugewandten Seite einen Filterelementanlagebereich (64) derart aufweist, dass während des Schließens des Aufnahmeraums (18) das Filterelement (20) direkt vom Filterelementanlagebereich (64) in eine Betriebsposition verschoben wird.

12. Ölfilteranordnung (10) nach Anspruch 11, **dadurch gekennzeichnet, dass** der Stützrohranlagebereich (58) und der Filterelementanlagebereich (64) in axialer Richtung in verschienen Ebenen liegen und/oder dass der Stützrohranlagebereich (58) am Deckelelement (14) radial weiter innen angeordnet ist als der Filterelementanlagebereich (64).

13. Ölfilteranordnung (10) nach wenigstens Anspruch 11 oder 12, **dadurch gekennzeichnet, dass** der Stützrohranlagebereich (12) und/oder der Filterelementanlagebereich (64) von den Mitnahmeabschnitten gebildet sind.

14. Ölfilteranordnung (10) nach wenigstens einem der vorhergehenden Ansprüche, **dadurch gekennzeichnet, dass** am freien, dem Deckelelement zugewandten Ende (62) des Stützrohrs (22) Aussparungen oder Erhebungen vorgesehen sind, die den deckelseitigen Mitnahmeabschnitten bei Verdrehen des Deckelelements zusammenwirken.

## Claims

1. Oil filter assembly (10) comprising a receiving chamber (18), which is disposed in a housing (12) and can be closed by a cover element (14) that can be screwed on, and a supporting tube (22), which is fixed in the receiving chamber (18) and is spring-loaded in the axial direction for receiving a filter element (20) through which oil can flow in a radial direction, wherein the supporting tube (22) is disposed in the axial direction between an operating position and a drain position such that it closes a drain opening (42) in the operating position when the receiving chamber (18) is closed by the cover element (14), and opens a drain opening (42) in the drain position when the receiving chamber (18) is opened, **characterized in that** the supporting tube (22) is disposed such that it can be rotated through an angle of rotation that is defined by two rotary stops (41, 43) on the housing side, wherein the cover element (14) has carrier sections (60, 66) that cooperate with the supporting tube (22) and/or the filter element (20) for rotating the supporting tube through the angle of rotation when the cover element is screwed on and/or unscrewed.

2. Oil filter assembly (10) according to claim 1, **characterized in that** the angle of rotation is in a range between 5° and 90°, and in particular in a range between 10° and 30°.

3. Oil filter assembly (10) according to claim 1 or 2, **characterized in that** connecting pins (38) are provided in the area of the bottom (26) of the receiving chamber (18), which extend in the axial direction and engage in pin recesses (40) on the supporting tube side, wherein the areas of a pin recess (40), which are disposed opposite to each other coaxially about the center longitudinal axis, form the rotary stops (41, 43).

4. Oil filter assembly (10) according to claim 1, 2, or 3, **characterized in that** the connecting pins (38) have a widening (39) in the area of their free ends, wherein the lower edge of the widening (39) forms an axial stop for the supporting tube in the drain position of the supporting tube (22).

5. Oil filter assembly (10) according to claim 4, **characterized in that** the widening (39) is produced through hot riveting after insertion of the supporting tube (22) and thereby of the pin recesses (40) into the connecting pins (38).

6. Oil filter assembly (10) according to claim 4, **characterized in that** the widening (39) is formed as the detent that engages behind the respective pin recess (40).

7. Oil filter assembly (10) according to any one of the claims 3 through 6, **characterized in that** the pin recesses (40) are disposed on feet (104), which project in a radial outward direction, or on a collar (28) of the supporting tube (22), which projects in a radial outward direction and is circumferential at least in sections.

8. Oil filter assembly (10) according to at least one of the preceding claims, **characterized in that** the carrier sections are formed as webs or ribs (60, 66) that project in a radial inward direction and/or axial downward direction.

9. Oil filter assembly (10) according to at least one of the preceding claims, **characterized in that** the cover element (14) has a supporting tube abutment area (58) on its side facing the receiving chamber (18) such that, when the filter element (20) is disposed on the supporting tube (22), the supporting tube (22) is directly loaded by the supporting tube abutment area (58) and is displaced into the operating position when the receiving chamber (14) is being closed or, when the filter element (20) is disposed on the supporting tube (22) and the receiving chamber (18) is closed, the supporting tube abutment area (58) directly keeps the supporting tube (22) in the operating position.

10. Oil filter assembly (10) according to at least one of the preceding claims, **characterized in that** the supporting tube (22) projects past the filter element in the direction towards the cover element (14) when the receiving chamber (18) is closed and the filter element (20) is disposed on the supporting tube (22).

11. Oil filter assembly (10) according to at least one of the preceding claims, **characterized in that** the cover element (14) has a filter element abutment area (64) on its side facing the receiving chamber (18) such that the filter element (20) is directly displaced by the filter element abutment area (64) into an operating position while the receiving chamber (18) is being closed.

12. Oil filter assembly (10) according to claim 11, **characterized in that** the supporting tube abutment area (58) and the filter element abutment area (64) are located at different planes in the axial direction and/or the supporting tube abutment area (58) is disposed on the cover element (14) at a radially further inward position than the filter element abutment area (64).

13. Oil filter assembly (10) according to at least claim 11 or 12, **characterized in that** the supporting tube abutment area (12) and/or the filter element abutment area (64) are formed by the carrier sections.

14. Oil filter assembly (10) according to at least one of the preceding claims, **characterized in that** recesses or elevations are provided at the free end (62), facing the cover element, of the supporting tube (22), which cooperate with the carrier sections on the cover side when the cover element is turned.

## Revendications

1. Ensemble de filtre à huile (10), comportant un logement (18) disposé dans un boîtier (12) et pouvant être fermé par un couvercle (14) propre à être vissé, et comportant un tube support (22), fixé dans le logement (18) et sollicité par ressort dans la direction axiale, lequel est destiné à recevoir un élément filtrant (20) pouvant être traversé radialement par l'huile, le tube support (22) étant monté de manière mobile dans la direction axiale entre une position de service et une position d'évacuation, de telle sorte que, lorsque le logement (18) est fermé par le couvercle (14), il obture un orifice d'évacuation (42) dans la position de service et, lorsque le logement (18) est ouvert, il libère un orifice d'évacuation (42) dans la position d'évacuation, **caractérisé en ce que** le tube support (22) est monté de manière à pouvoir tourner selon un angle de rotation limité par deux butées de rotation (41, 43) du côté du boîtier, le couvercle (14) comportant des parties d'entraînement (60, 66) coopérant avec le tube de support (22) et/ou l'élément filtrant (20) pour faire tourner le tube support selon l'angle de rotation pendant le vissage et/ou le dévissage du couvercle.

2. Ensemble de filtre à huile (10) selon la revendication 1, **caractérisé en ce que** l'angle de rotation se situe dans une plage de 5° à 90° et en particulier dans une plage de 10° à 30°.

3. Ensemble de filtre à huile (10) selon la revendication 1 ou 2, **caractérisé en ce que** dans la zone du fond (26) du logement (18) sont prévus des tenons d'assemblage (38) qui s'engagent dans des évidements (40) du côté du tube support, sachant que les zones, coaxialement face à face autour de l'axe longitudinal médian, d'un évidement (40) forment les butées de rotation (41, 43).

4. Ensemble de filtre à huile (10) selon la revendication 1, 2 ou 3, **caractérisé en ce que** les tenons d'assemblage (38), dans la zone de leurs extrémités libres, comportent un élargissement (39), le bord inférieur de l'élargissement (39) formant une butée axiale pour le tube support lorsque le tube support (22) est dans la position d'évacuation.

5. Ensemble de filtre à huile (10) selon la revendication 4, **caractérisé en ce que** l'élargissement (39) est formé par rivetage à chaud après la mise en place du tube support (22) et donc des évidements (40) dans les tenons d'assemblage (38).

6. Ensemble de filtre à huile (10) selon la revendication 4, **caractérisé en ce que** l'élargissement (39) est réalisé sous la forme du nez de blocage, bloqué derrière l'évidement (40) correspondant.

7. Ensemble de filtre à huile (10) selon l'une quelconque des revendications 3 à 6, **caractérisé en ce que** les évidements (40) sont ménagés sur des pieds (104) en saillie radialement vers l'extérieur ou sur un collet (28), en saillie dans une direction radialement vers l'extérieur et réalisé au moins par zones sur le pourtour du tube support (22).

8. Ensemble de filtre à huile (10) selon l'une quelconque des revendications précédentes, **caractérisé en ce que** les parties d'entraînement sont réalisées sous la forme d'ailettes ou nervures (60, 66) s'avançant radialement vers l'intérieur et/ou axialement vers le bas.

9. Ensemble de filtre à huile (10) selon l'une quelconque des revendications précédentes, **caractérisé en ce que** le couvercle (14), sur son côté orienté vers le logement (18), comporte une zone d'appui (58) pour le tube support, de telle sorte que, lorsqu'un élément filtrant (20) est monté sur le tube support (22), ledit tube support (22) est sollicité directement par la zone d'appui (58) pendant la fermeture du logement (14) et est amené dans la position de service, ou **en ce que**, lorsqu'un élément filtrant (20) est monté sur le tube support (22) ou lorsque le logement (18) est fermé, la zone d'appui (58) maintient le tube support (22) directement dans la position de service.

10. Ensemble de filtre à huile (10) selon l'une quelconque des revendications précédentes, **caractérisé en ce que**, lorsque le logement (18) est fermé et lorsque l'élément filtrant (20) est monté sur le tube support (22), le tube support (22) s'avance au-delà de l'élément filtrant vers le couvercle.

11. Ensemble de filtre à huile (10) selon l'une quelconque des revendications précédentes, **caractérisé en ce que** le couvercle (14), sur son côté orienté vers le logement (18), comporte une zone d'appui (64) pour l'élément filtrant, de telle sorte que, pendant la fermeture du logement (18), l'élément filtrant (20) est amené directement par la zone d'appui (64) dans une position de service.

12. Ensemble de filtre à huile (10) selon la revendication 11, **caractérisé en ce que** la zone d'appui (58) pour le tube support et la zone d'appui (64) pour l'élément filtrant sont situées dans des plans différents dans la direction axiale et/ou **en ce que** la zone d'appui (58) pour le tube support est disposée sur le couvercle (14) radialement plus vers l'intérieur que la zone d'appui (64) pour l'élément filtrant.

13. Ensemble de filtre à huile (10) selon au moins la revendication 11 ou 12, **caractérisé en ce que** la zone d'appui (58) pour le tube support et/ou la zone d'appui (64) pour l'élément filtrant sont formées par les parties d'entraînement.

14. Ensemble de filtre à huile (10) selon l'une quelconque des revendications précédentes, **caractérisé en ce que**, au niveau de l'extrémité libre du tube support (22), orientée vers le couvercle, sont prévus des creux ou des bosses qui coopèrent avec les parties d'entraînement du côté couvercle pendant la rotation du couvercle.
